(19) Europäisches Patentamt / European Patent Office / Office européen des brevets

(11) **EP 4 609 220 B1**

(12) **EUROPEAN PATENT SPECIFICATION**

(45) Date of publication and mention
of the grant of the patent:
**08.07.2026  Bulletin 2026/28**

(21) Application number: **23782403.2**

(22) Date of filing: **08.09.2023**

(51) International Patent Classification (IPC):
**G01S 5/02** *(2010.01)*      **H04W 84/18** *(2009.01)*
**H04W 16/10** *(2009.01)*      **H04W 64/00** *(2009.01)*
**G01S 11/02** *(2010.01)*

(52) Cooperative Patent Classification (CPC):
**G01S 11/02; G01S 5/0215; G01S 5/02;**
H04W 16/10; H04W 64/00; H04W 84/18

(86) International application number:
**PCT/US2023/073731**

(87) International publication number:
**WO 2024/091737 (02.05.2024 Gazette 2024/18)**

(54) **INTERFERENCE MITIGATION IN UWB**

INTERFERENZUNTERDRÜCKUNG IN UWB

ATTÉNUATION D'INTERFÉRENCE DANS UNE UWB

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.10.2022  GR 20220100874**

(43) Date of publication of application:
**03.09.2025  Bulletin 2025/36**

(73) Proprietor: **QUALCOMM INCORPORATED**
**San Diego, California 92121-1714 (US)**

(72) Inventors:
• **REDDY, Varun Amar**
  **San Diego, California 92121-1714 (US)**
• **MANOLAKOS, Alexandros**
  **San Diego, California 92121-1714 (US)**
• **MUKKAVILLI, Krishna Kiran**
  **San Diego, California 92121-1714 (US)**

(74) Representative: **Carstens, Dirk Wilhelm**
**Wagner & Geyer Partnerschaft mbB**
**Patent- und Rechtsanwälte**
**Gewürzmühlstraße 5**
**80538 München (DE)**

(56) References cited:
**EP-A1- 3 629 621     US-A1- 2021 173 066**

**Description**

RELATED APPLICATIONS

This application claims the benefit of Greek Application No. 20220100874, filed October 25, 2022, entitled "INTERFERENCE MITIGATION IN UWB".

BACKGROUND

1. Field of Disclosure

The present disclosure relates generally to the field of radiofrequency (RF)-based sensing (e.g., position determination/positioning) of an electronic wireless device. More specifically, the present disclosure relates to ultra-wideband (UWB)-based positioning.

2. Description of Related Art

The sensing of devices can have a wide range of consumer, industrial, commercial, military, and other applications. UWB-based positioning offers a highly accurate, low-power positioning solution relative to other RF-based sensing techniques for wireless electronic devices.
Attention is drawn to EP 3 629 621 A1 describing methods and apparatus to support channel access control for keyless vehicle entry systems. An initiating central wireless device of a wireless personal area network (WPAN) queries multiple responding peripheral wireless devices to perform ranging for distance and/or angle of arrival data, where the multiple peripheral wireless devices coordinate responses to minimize interference, avoid overlapping transmissions, and reduce time to complete ranging. Ranging frames are divided into multiple ranging time slots, where each ranging time slot can accommodate a full ranging cycle between the central and peripheral wireless devices. The central wireless device determines which ranging time slot to use based on estimates of communication channel interference and on a number of received responses from the peripheral wireless devices. Ranging measurements are provided to a controller of a vehicle that houses the peripheral wireless devices to determine whether to permit vehicle access.
Attention is further drawn to US 2021/173066 A1 describing a method of a first device which performs ranging by using an ultra-wide band (UWB) and the first device. The method of the first device includes performing ranging with a second device in a first ranging round among a plurality of ranging rounds included in a first ranging block, determining whether to perform hopping, based on a result of the performing of the ranging, when it is determined to perform the hopping, determining an index of a second ranging round for performing ranging with a second device, based on a random-number generation function, and performing the ranging with the second device in the second ranging round of a second ranging block.

BRIEF SUMMARY

The present invention is set forth in the independent claims, respectively. Further embodiments of the invention are described in the dependent claims.
An example method of ultra-wideband (UWB) wireless ranging performed by a first UWB device, may comprise detecting a first potential interference of a first radio frequency (RF) channel. The method may also comprise receiving, from a second UWB device, an interference report indicating a second potential interference of the first RF channel detected by the second UWB device. The method may also comprise determining a round hopping pattern based on the first potential interference and the second potential interference for transmitting one or more UWB ranging messages between the first UWB device and the second UWB device. The method may also comprise transmitting, to the second UWB device, a UWB ranging session configuration indicative of the round hopping pattern.
An example first ultra-wideband (UWB) device for UWB wireless ranging, may comprise a transceiver, a memory, one or more processors communicatively coupled with the transceiver and the memory, wherein the one or more processors may be configured to detect a first potential interference of a first radio frequency (RF) channel. The one or more processors may also be configured to receive, from a second UWB device, an interference report indicating a second potential interference of the first RF channel detected by the second UWB device. The one or more processors may also be configured to determine a round hopping pattern based on the first potential interference and the second potential interference for transmitting one or more UWB ranging messages between the first UWB device and the second UWB device. The one or more processors may also be configured to transmit, to the second UWB device, a UWB ranging session configuration indicative of the round hopping pattern.
An example apparatus for UWB wireless ranging, the apparatus may comprise means for detecting a first potential interference of a first radio frequency (RF) channel. The apparatus may also comprise means for receiving, from a second UWB device, an interference report indicating a second potential interference of the first RF channel detected by the second UWB device. The apparatus may also comprise means for determining a round hopping pattern based on the first potential interference and the second potential interference for transmitting one or more UWB ranging messages between the first UWB device and the second UWB device. The apparatus may also comprise means for transmitting, to the second UWB device, a UWB ranging session configuration indicative of the round hopping pattern.
This summary is neither intended to identify key or essential features of the claimed subject matter, nor is it intended to be used in isolation to determine the scope of the claimed subject matter. The subject matter should be understood by reference to appropriate portions of the entire specification of this disclosure, any or all drawings, and each claim. The foregoing, together with other features and examples, will be described in more detail below in the following specification, claims, and accompanying drawings.

BRIEF DESCRIPTION OF THE DRAWINGS

FIG. 1 is a diagram of a positioning system, according to an embodiment.

FIG. 2 is a diagram illustrating a scenario in which ultra-wideband (UWB) technologies may be used for positioning a target device.

FIGS. 3A and 3B are flow diagrams illustrating the roles different devices may assume with regard to a UWB ranging session.

FIG. 4 is a timing diagram showing an example of a frame structure for a UWB ranging session and associated terminology.

FIG. 5 is a flow diagram illustrating how a controller and a controlee may mitigate interferences in UWB wireless ranging, according to some embodiments

FIG. 6 is a timing diagram showing an example of scheduling information exchange between the controller and controlee based on the interference mitigation process, according to some embodiments.

FIG. 7 is a flow diagram of a method of interference mitigation in UWB ranging session, according to an embodiment.

FIG. 8 is a block diagram of an embodiment of a mobile UWB device, according to an embodiment.

FIG. 9 is a block diagram of an embodiment of a stationary UWB device, according to an embodiment.

Like reference symbols in the various drawings indicate like elements, in accordance with certain example implementations. In addition, multiple instances of an element may be indicated by following a first number for the element with a letter or a hyphen and a second number. For example, multiple instances of an element 110 may be indicated as 110-1, 110-2, 110-3 etc. or as 110a, 110b, 110c, etc. When referring to such an element using only the first number, any instance of the element is to be understood (e.g., element 110 in the previous example would refer to elements 110-1, 110-2, and 110-3 or to elements 110a, 110b, and 110c).

DETAILED DESCRIPTION

The following description is directed to certain implementations for the purposes of describing innovative aspects of various embodiments. However, a person having ordinary skill in the art will readily recognize that the teachings herein can be applied in a multitude of different ways. The described implementations may be implemented in any device, system, or network that is capable of transmitting and receiving radio frequency (RF) signals according to any communication standard, such as any of the Institute of Electrical and Electronics Engineers (IEEE) 802.15.4 standards for ultra-wideband (UWB), IEEE 802.11 standards (including those identified as Wi-Fi® technologies), the Bluetooth® standard, code division multiple access (CDMA), frequency division multiple access (FDMA), time division multiple access (TDMA), Global System for Mobile communications (GSM), GSM/General Packet Radio Service (GPRS), Enhanced Data GSM Environment (EDGE), Terrestrial Trunked Radio (TETRA), Wideband-CDMA (W-CDMA), Evolution Data Optimized (EV-DO), 1xEV-DO, EV-DO Rev A, EV-DO Rev B, High Rate Packet Data (HRPD), High Speed Packet Access (HSPA), High Speed Downlink Packet Access (HSDPA), High Speed Uplink Packet Access (HSUPA), Evolved High Speed Packet Access (HSPA+), Long Term Evolution (LTE), Advanced Mobile Phone System (AMPS), or other known signals that are used to communicate within a wireless, cellular or internet of things (IoT) network, such as a system utilizing 3G, 4G, 5G, 6G, or further implementations thereof, technology.

As used herein, an "RF signal" comprises an electromagnetic wave that transports information through the space between a transmitter (or transmitting device) and a receiver (or receiving device). As used herein, a transmitter may transmit a single "RF signal" or multiple "RF signals" to a receiver. However, the receiver may receive multiple "RF signals" corresponding to each transmitted RF signal due to the propagation characteristics of RF signals through multiple channels or paths.

Further, unless otherwise specified, the term "positioning" as used herein may absolute location determination, relative location determination, ranging, or a combination thereof. Such positioning may include and/or be based on timing, angular, phase, or power measurements, or a combination thereof (which may include RF sensing measurements) for the purpose of location or sensing services.

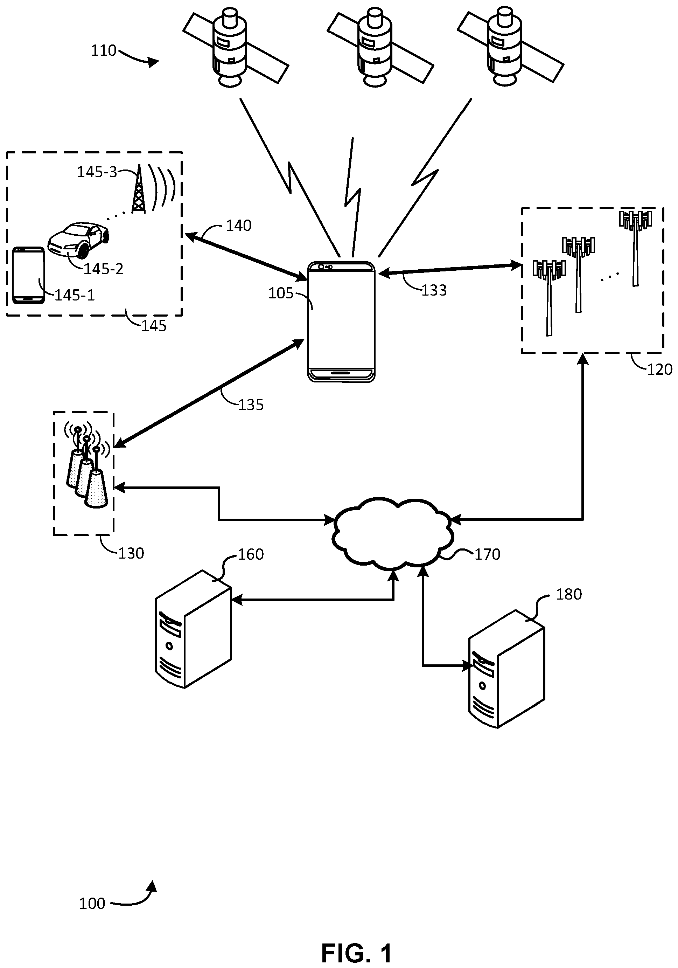

As previously noted, UWB-based positioning offers a highly-accurate, low-power positioning solution relative to other RF-based positioning techniques for wireless electronic devices. UWB-based positioning can be used in industrial applications, such as by robots and/or other Internet of Things (IoT) devices in a factory setting, indoor positioning of consumer electronics, and more. Although UWB-based positioning may be used in an ad hoc manner as a standalone positioning technique between electronic devices capable of UWB positioning (also referred to herein as "UWB devices"), in some embodiments UWB-based positioning may be used as one of many techniques for positioning an electronic device in a positioning system. FIG. 1 provides an example of such a positioning system (which will be described in detail below).

However, when performing UWB sessions (e.g., performing UWB ranging sessions), RF interferences on the RF channel (e.g., RF interferences caused by the other UBW devices in the vicinity (e.g., other UWB ranging/data transmission pairs) and/or other Radio Access Technologies (RATs)) may cause information exchange inefficiency and/or inaccuracy of the measurements (e.g., time-of-arrival (ToA) measurements, angle-of-arrival (AoA) measurements). Existing interference mitigation solutions, such as clear channel assessment (CCA) or time-hopping scheme (e.g., hop the frame across slots as per a pseudo-random pattern (e.g., per a time hopping function known to both initiator and responder of the UWB session) where data sequences generated accordingly for different ranging pairs need to have a high cross-correlation, and/or a static pattern), e.g., applying slot-level (e.g., ranging slot level) CCA-based on medium access control (MAC) on the entire ranging block (e.g., performing CCA to determine whether the channel is occupied/busy), and performing fragmentation on the entire ranging block according to the CCA (e.g., fragmenting the preamble/synchronization packet, transmitting the fragments across several milliseconds, and determining which fragments are transmitted without CCA busy) may introduce more logic and complexity to the MAC and may lead to larger latency of the data transmission. Accordingly, an improved interference mitigation technique for UWB sessions that could reduce/avoid the potential RF interference without introducing much complexity to the MAC and increasing ranging latency can be advantageous.

**FIG. 1** is a simplified illustration of a positioning system 100 in which a UE 105, location server 160, and/or other components of the positioning system 100 can use the techniques provided herein for UWB wireless positioning, according to an embodiment. The techniques described herein may be implemented by one or more components of the positioning system 100. The positioning system 100 can include: a UE 105; one or more satellites 110 (also referred to as space vehicles (SVs)) for a Global Navigation Satellite System (GNSS) such as the Global Positioning System (GPS), GLONASS, Galileo or Beidou; base stations 120; access points (APs) 130; location server 160; network 170; and external client 180. Generally put, the positioning system 100 can estimate a location of the UE 105 based on RF signals received by and/or sent from the UE 105 and known locations of other components (e.g., GNSS satellites 110, base stations 120, APs 130) transmitting and/or receiving the RF signals. Additional details regarding particular location estimation techniques are discussed in more detail with regard to FIG. **Error! Reference source not found..**

It should be noted that FIG. 1 provides only a generalized illustration of various components, any or all of which may be utilized as appropriate, and each of which may be duplicated as necessary. Specifically, although only one UE 105 is illustrated, it will be understood that many UEs (e.g., hundreds, thousands, millions, etc.) may utilize the positioning system 100. Similarly, the positioning system 100 may include a larger or smaller number of base stations 120 and/or APs 130 than illustrated in FIG. 1. The illustrated connections that connect the various components in the positioning system 100 comprise data and signaling connections which may include additional (intermediary) components, direct or indirect physical and/or wireless connections, and/or additional networks. Furthermore, components may be rearranged, combined, separated, substituted, and/or omitted, depending on desired functionality. In some embodiments, for example, the external client 180 may be directly connected to location server 160. A person of ordinary skill in the art will recognize many modifications to the components illustrated.

Depending on desired functionality, the network 170 may comprise any of a variety of wireless and/or wireline networks. The network 170 can, for example, comprise any combination of public and/or private networks, local and/or wide-area networks, and the like. Furthermore, the network 170 may utilize one or more wired and/or wireless communication technologies. In some embodiments, the network 170 may comprise a cellular or other mobile network, a wireless local area network (WLAN), a wireless wide-area network (WWAN), and/or the Internet, for example. Examples of network 170 include a Long-Term Evolution (LTE) wireless network, a Fifth Generation (5G) wireless network (also referred to as New Radio (NR) wireless network or 5G NR wireless network), a Wi-Fi WLAN, and the Internet. LTE, 5G and NR are wireless technologies defined, or being defined, by the 3rd Generation Partnership Project (3GPP). Network 170 may also include more than one network and/or more than one type of network.

The base stations 120 and access points (APs) 130 may be communicatively coupled to the network 170. In some embodiments, the base station 120s may be owned, maintained, and/or operated by a cellular network provider, and may employ any of a variety of wireless technologies, as described herein below. Depending on the technology of the network 170, a base station 120 may comprise a node B, an Evolved Node B (eNodeB or eNB), a base transceiver station (BTS), a radio base station (RBS), an NR NodeB (gNB), a Next Generation eNB (ng-eNB), or the like. A base station 120 that is a gNB or ng-eNB may be part of a Next Generation Radio Access Network (NG-RAN) which may connect to a 5G Core Network (5GC) in the case that Network 170 is a 5G network. The functionality performed by a base station 120 in earlier-generation networks (e.g., 3G and 4G) may be separated into different functional components (e.g., radio units (RUs), distributed units (DUs), and central units (CUs)) and layers (e.g., L1/L2/L3) in view Open Radio Access Networks (O-RAN) and/or Virtualized Radio Access Network (V-RAN or vRAN) in 5G or later networks, which may be executed on different devices at different locations connected, for example, via fronthaul, midhaul, and backhaul connections. As referred to herein, a "base station" (or ng-eNB, gNB, etc.) may include any or all of these functional components. An AP 130 may comprise a Wi-Fi AP or a Bluetooth® AP or an AP having cellular capabilities (e.g., 4G LTE and/or 5G NR), for example. Thus, UE 105 can send and receive information with network-connected devices, such as location server 160, by accessing the network 170 via a base station 120 using a first communication link 133. Additionally or alternatively, because APs 130 also may be communicatively coupled with the network 170, UE 105 may communicate with network-connected and Internet-connected devices, including location server 160, using a second communication link 135, or via one or more other mobile devices 145.

As used herein, the term "base station" may generically refer to a single physical transmission point, or multiple co-located physical transmission points, which may be located at a base station 120. A Transmission Reception Point (TRP) (also known as transmit/receive point) corresponds to this type of transmission point, and the term "TRP" may be used interchangeably herein with the terms "gNB," "ng-eNB," and "base station." In some cases, a base station 120 may comprise multiple TRPs - e.g. with each TRP associated with a different antenna or a different antenna array for the base station 120. As used herein, the transmission functionality of a TRP may be performed with a transmission point (TP) and/or the reception functionality of a TRP may be performed by a reception point (RP), which may be physically separate or distinct from a TP. That said, a TRP may comprise both a TP and an RP. Physical transmission points may comprise an array of antennas of a base station 120 (e.g., as in a Multiple Input-Multiple Output (MIMO) system and/or where the base station employs beamforming). The term "base station" may additionally refer to multiple non-co-located physical transmission points, the physical transmission points may be a Distributed Antenna System (DAS) (a network of spatially separated antennas connected to a common source via a transport medium) or a Remote Radio Head (RRH) (a remote base station connected to a serving base station).

As used herein, the term "cell" may generically refer to a logical communication entity used for communication with a base station 120, and may be associated with an identifier for distinguishing neighboring cells (e.g., a Physical Cell Identifier (PCID), a Virtual Cell Identifier (VCID)) operating via the same or a different carrier. In some examples, a carrier may support multiple cells, and different cells may be configured according to different protocol types (e.g., Machine-Type Communication (MTC), Narrowband Internet-of-Things (NB-IoT), Enhanced Mobile Broadband (eMBB), or others) that may provide access for different types of devices. In some cases, the term "cell" may refer to a portion of a geographic coverage area (e.g., a sector) over which the logical entity operates.

Satellites 110 may be utilized for positioning of the UE 105 in one or more ways. For example, satellites 110 (also referred to as space vehicles (SVs)) may be part of a Global Navigation Satellite System (GNSS) such as the Global Positioning System (GPS), GLONASS, Galileo or Beidou. Positioning using RF signals from GNSS satellites may comprise measuring multiple GNSS signals at a GNSS receiver of the UE 105 to perform code-based and/or carrier-based positioning, which can be highly accurate. Additionally or alternatively, satellites 110 may be utilized for Non-Terrestrial Network (NTN)-based positioning, in which satellites 110 may functionally operate as TRPs (or TPs) of a network (e.g., LTE and/or NR network) and may be communicatively coupled with network 170. In particular, reference signals (e.g., PRS) transmitted by satellites 110 NTN-based positioning may be similar to those transmitted by base stations 120, and may be coordinated by a location server 160. In some embodiments, satellites 110 used for NTN-based positioning may be different than those used for GNSS-based positioning.

The location server 160 may comprise a server and/or other computing device configured to determine an estimated location of UE 105 and/or provide data (e.g., "assistance data") to UE 105 to facilitate location measurement and/or location determination by UE 105. According to some embodiments, location server 160 may comprise a Home Secure User Plane Location (SUPL) Location Platform (H-SLP), which may support the SUPL user plane (UP) location solution defined by the Open Mobile Alliance (OMA) and may support location services for UE 105 based on subscription information for UE 105 stored in location server 160. In some embodiments, the location server 160 may comprise, a Discovered SLP (D-SLP) or an Emergency SLP (E-SLP). The location server 160 may also comprise an Enhanced Serving Mobile Location Center (E-SMLC) that supports location of UE 105 using a control plane (CP) location solution for LTE radio access by UE 105. The location server 160 may further comprise a Location Management Function (LMF) that supports location of UE 105 using a control plane (CP) location solution for NR or LTE radio access by UE 105.

In a CP location solution, signaling to control and manage the location of UE 105 may be exchanged between elements of network 170 and with UE 105 using existing network interfaces and protocols and as signaling from the perspective of network 170. In a UP location solution, signaling to control and manage the location of UE 105 may be exchanged between location server 160 and UE 105 as data (e.g. data transported using the Internet Protocol (IP) and/or Transmission Control Protocol (TCP)) from the perspective of network 170.

As previously noted (and discussed in more detail below), the estimated location of UE 105 may be based on measurements of RF signals sent from and/or received by the UE 105. In particular, these measurements can provide information regarding the relative distance and/or angle of the UE 105 from one or more components in the positioning system 100 (e.g., GNSS satellites 110, APs 130, base stations 120). The estimated location of the UE 105 can be estimated geometrically (e.g., using multiangulation and/or multilateration), based on the distance and/or angle measurements, along with known position of the one or more components.

Although terrestrial components such as APs 130 and base stations 120 may be fixed, embodiments are not so limited. Mobile components may be used. For example, in some embodiments, a location of the UE 105 may be estimated at least in part based on measurements of RF signals 140 communicated between the UE 105 and one or more other mobile devices 145, which may be mobile or fixed. As illustrated, other mobile devices may include, for example, a mobile phone 145-1, vehicle 145-2, static communication/positioning device 145-3, or other static and/or mobile device capable of providing wireless signals used for positioning the UE 105, or a combination thereof. Wireless signals from mobile devices 145 used for positioning of the UE 105 may comprise RF signals using, for example, Bluetooth® (including Bluetooth Low Energy (BLE)), IEEE 802.11x (e.g., Wi-Fi®), Ultra Wideband (UWB), IEEE 802.15x, or a combination thereof. Mobile devices 145 may additionally or alternatively use non-RF wireless signals for positioning of the UE 105, such as infrared signals or other optical technologies.

Mobile devices 145 may comprise other UEs communicatively coupled with a cellular or other mobile network (e.g., network 170). When one or more other mobile devices 145 comprising UEs are used in the position determination of a particular UE 105, the UE 105 for which the position is to be determined may be referred to as the "target UE," and each of the other mobile devices 145 used may be referred to as an "anchor UE." For position determination of a target UE, the respective positions of the one or more anchor UEs may be known and/or jointly determined with the target UE. Direct communication between the one or more other mobile devices 145 and UE 105 may comprise sidelink and/or similar Device-to-Device (D2D) communication technologies. Sidelink, which is defined by 3GPP, is a form of D2D communication under the cellular-based LTE and NR standards. UWB may be one such technology by which the positioning of a target device (e.g., UE 105) may be facilitated using measurements from one or more anchor devices (e.g., mobile devices 145).

According to some embodiments, such as when the UE 105 comprises and/or is incorporated into a vehicle, a form of D2D communication used by the mobile device 105 may comprise vehicle-to-everything (V2X) communication. V2X is a communication standard for vehicles and related entities to exchange information regarding a traffic environment. V2X can include vehicle-to-vehicle (V2V) communication between V2X-capable vehicles, vehicle-to-infrastructure (V2I) communication between the vehicle and infrastructure-based devices (commonly termed roadside units (RSUs)), vehicle-to-person (V2P) communication between vehicles and nearby people (pedestrians, cyclists, and other road users), and the like. Further, V2X can use any of a variety of wireless RF communication technologies. Cellular V2X (CV2X), for example, is a form of V2X that uses cellular-based communication such as LTE (4G), NR (5G) and/or other cellular technologies in a direct-communication mode as defined by 3GPP. The UE 105 illustrated in FIG. 1 may correspond to a component or device on a vehicle, RSU, or other V2X entity that is used to communicate V2X messages. In embodiments in which V2X is used, the static communication/positioning device 145-3 (which may correspond with an RSU) and/or the vehicle 145-2, therefore, may communicate with the UE 105 and may be used to determine the position of the UE 105 using techniques similar to those used by base stations 120 and/or APs 130 (e.g., using multiangulation and/or multilateration). It can be further noted that mobile devices 145 (which may include V2X devices), base stations 120, and/or APs 130 may be used together (e.g., in a WWAN positioning solution) to determine the position of the UE 105, according to some embodiments.

An estimated location of UE 105 can be used in a variety of applications - e.g. to assist direction finding or navigation for a user of UE 105 or to assist another user (e.g. associated with external client 180) to locate UE 105. A "location" is also referred to herein as a "location estimate", "estimated location", "location", "position", "position estimate", "position fix", "estimated position", "location fix" or "fix". The process of determining a location may be referred to as "positioning," "position determination," "location determination," or the like. A location of UE 105 may comprise an absolute location of UE 105 (e.g. a latitude and longitude and possibly altitude) or a relative location of UE 105 (e.g. a location expressed as distances north or south, east or west and possibly above or below some other known fixed location (including, e.g., the location of a base station 120 or AP 130) or some other location such as a location for UE 105 at some known previous time, or a location of a mobile device 145 (e.g., another UE) at some known previous time). A location may be specified as a geodetic location comprising coordinates which may be absolute (e.g., latitude, longitude and optionally altitude), relative (e.g., relative to some known absolute location) or local (e.g. X, Y and optionally Z coordinates according to a coordinate system defined relative to a local area such a factory, warehouse, college campus, shopping mall, sports stadium or convention center). A location may instead be a civic location and may then comprise one or more of a street address (e.g., including names or labels for a country, state, county, city, road and/or street, and/or a road or street number), and/or a label or name for a place, building, portion of a building, floor of a building, and/or room inside a building etc. A location may further include an uncertainty or error indication, such as a horizontal and possibly vertical distance by which the location is expected to be in error or an indication of an area or volume (e.g. a circle or ellipse) within which UE 105 is expected to be located with some level of confidence (e.g. 95% confidence).

The external client 180 may be a web server or remote application that may have some association with UE 105 (e.g. may be accessed by a user of UE 105) or may be a server, application, or computer system providing a location service to some other user or users which may include obtaining and providing the location of UE 105 (e.g. to enable a service such as friend or relative finder, or child or pet location). Additionally or alternatively, the external client 180 may obtain and provide the location of UE 105 to an emergency services provider, government agency, etc.

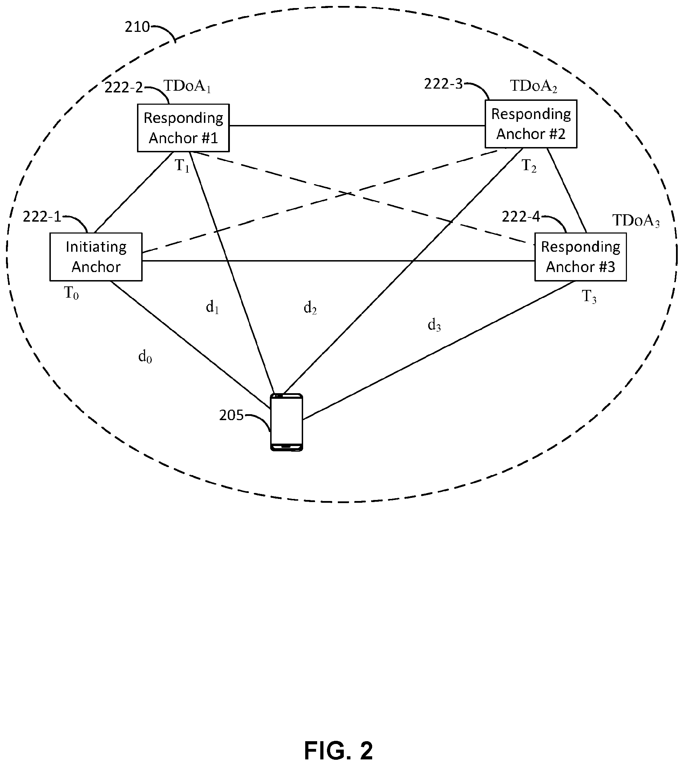

As a non-limiting example of UWB positioning, FIG. 2 is a diagram illustrating a scenario in which UWB technologies may be used for positioning a target device 205 (e.g., a tag). Here, target device 205 may correspond with mobile device 105 of FIG. 1. As illustrated in FIG. 2, a target device 205 may comprise a wireless communication device within a coverage of a cluster 210. Cluster 210 may include one or more UWB devices (e.g., UWB anchors 222) with known locations that can exchange UWB RF signals (e.g., downlink time difference of arrival (TDoA) signals) with target device 205 for positioning of target device 205. For example, as illustrated in FIG. 2, UWB anchors 222 may include an initiator 222-1 (e.g., an initiating anchor) and responders 222-2, 222-3, and 222-4 (e.g., responding anchors). The roles of each of the devices (e.g., initiator 222-1 and responders 222-2, 222-3, and 222-4) will be disclosed in detail below. In some embodiments, UWB anchors 222 may be downlink UWB anchors.

When performing positioning/ranging of target device 205, target device 205 may send and/or receive UWB RF signals from UWB anchors 222. UWB anchors 222 may use different measurements of the UWB RF signals (e.g., time difference of arrival (TDoA), two-way ranging (TWR), reverse TDoA, and/or phase difference of arrival (PDoA)) to calculate the distance between devices (e.g., perform ranging). For example, in a time difference of arrival (TDoA) scheme, target device 205 may send a UWB RF signal (e.g., a "beacon" or a "blink" signal) to each of anchors 222, where each of UWB anchors 222 timestamps the arrival/reception of the UWB RF signal based on a common synchronized time-base. The timestamps from each of UWB anchors 222 may be used for calculating the TDoA for each of the responders (e.g., responders 222-2, 222-3, and 222-4). For example, the TDoA for responders 222-2, $TDoA_1$ (e.g., the time difference between initiator 222-1 and responder 222-2) may be calculated as:

$$TDoA_1 = (d_1 - d_0)/c = T_1 - T_0$$

where $d_0$ and $d_1$ denote the distance between target device 205 and initiator 222-1 and responder 222-2 respectively, c denotes the speed of light, and $T_0$ and $T_1$ denote the timestamps when the UWB RF signal is received by initiator 222-1 and responder 222-2 respectively. The location of target device 205 may be determined based on the TDoAs (e.g., $TDoA_1$, $TDoA_2$, and $TDoA_3$).

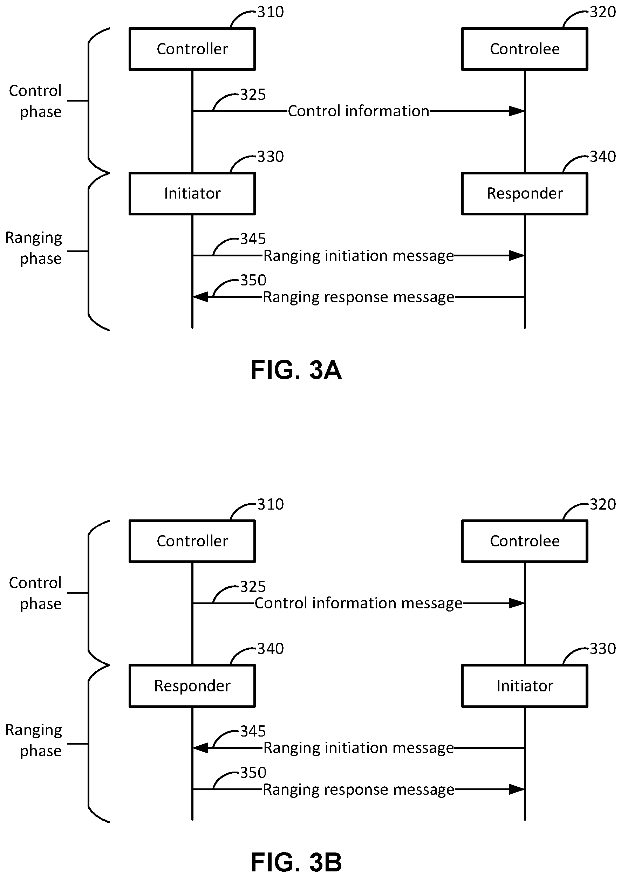

FIG. 3A is a flow diagram illustrating the roles different devices may assume with regard to a UWB ranging session (or simply a "UWB session"). Here, each UWB device may be referred to as an enhanced ranging device (ERDEV). ERDEVs may be referred to different terminologies (e.g., initiator/responder or controller/controlee) at different layers of the network stack. The terms initiator and responder (described above and hereafter) would be used at lower layers (e.g., at UWB physical (PHY) and media access control (MAC) layers), while the terms controller and controlee (also described hereafter) may be used at higher layers (e.g., an application layer of the ERDEVs). Here, either ERDEV may correspond with a target device 205 or UWB anchors 222 of FIG. 2, or mobile device 105 of FIG. 1.

As indicated, for a pair of ERDEVs communicating with each other, the controller 310 is an ERDEV that sends control information message 325 to a receiving ERDEV, designated as controlee 320. Control information message 325 may include parameters for the ranging phase of the UWB ranging session, such as timing, channel, etc. Although not illustrated, controlee 320 can send acknowledgment to control information message 325, may negotiate changes to the parameters, and/or the like.

The exchange between controller 310 and controlee 320, including the sending of control information message 325 and subsequent related exchanges between controller 310 and controlee 320 regarding control information, may be conducted out of band (OOB) using a different wireless communication technology (e.g., Bluetooth or Wi-Fi), prior to a ranging phase. Put differently, a UWB session may be associated with a control phase and a ranging phase, where the control phase (which may take place on an OOB link) comprises a preliminary exchange between controller 310 and controlee 320 of parameter values for the ranging phase, and the subsequent ranging phase comprises the portion of the UWB session in which devices exchange messages within the UWB band for ranging measurements. (It can be noted, however, that some control information may be exchanged within the UWB band (e.g., a "ranging control phase" occurring in the first slot of a UWB round. Accordingly, some aspects of the control phase may be considered to occur in band, subsequent to the preliminary OOB exchange between controller 310 and controlee 320.)

The UWB session may occur afterward, in accordance with the parameters provided in the control information. In the ranging phase of the UWB session, one ERDEV may take the role of an initiator 330 and the other ERDEV may take the role of a responder 340. As indicated in FIG. 3A, initiator 330 may initiate UWB ranging by sending a ranging initiation message 345 to responder 340, to which the responder 340 may reply with a ranging response message 350, and timing measurements may be made of these messages (by the devices receiving the messages) to perform the time difference of arrival (TDoA). Depending on the parameters of control information message 325, additional exchanges may be made in the ranging phase between initiator 330 and responder 340 to allow for additional ranging measurements.

The roles of initiator 330 and responder 340 may be indicated in control information message 325. Further, as indicated in FIG. 3A, controller 310 in the control phase may be initiator 330 in the ranging phase of the UWB session. Alternatively, as indicated in FIG. 3B, controller 310 in the control phase may be responder 340 in the ranging phase. The determination of which device is initiator 330 and which is responder 340 may depend on the parameters set forth in control information 325, in which case controlee 320 correspondingly becomes either responder 340 or initiator 330. According to some embodiments, a controller/initiator may conduct ranging with multiple controlees/responders.

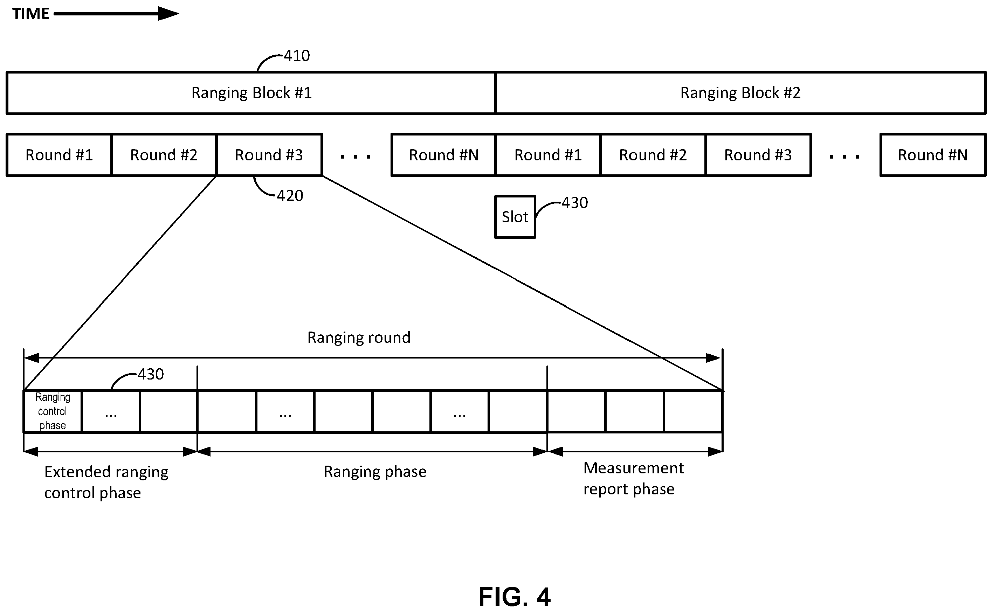

FIG. 4 is a timing diagram showing an example of a frame structure for a UWB ranging session and associated terminology. The timing in a UWB ranging session may occur over a period of time divided into sub-portions according to a hierarchical structure. Similar to a TDMA scheme, the UWB ranging session defines timing during which ranging can occur. This timing comprises one or more consecutive ranging blocks 410, which may have a configurable duration (e.g., 200 ms). Each ranging block 410 may be split into one or more successive rounds 420 (e.g., N rounds), the number and length of which are configurable. As noted above, each round may be assigned/arranged to a cluster (e.g., the cluster 210 in FIG. 2) for message transmission. The responder (e.g., responders 222-2, 222-3, and 222-4 in FIG. 2 and/or responders 340 in FIGS. 3A and 3B) may transmit messages only within the round assigned to the corresponding cluster. In some embodiments, the arrangement may be identified in the control information using its corresponding round index (e.g., Round #3). For example, the round index may be either statically configured by the controller (e.g., controller 310 in FIGS. 3A and 3B) or may be selected as per a hopping pattern.

Rounds 420 may further be split into different slots 430, which also have a configurable number and length. Slots 430 may be arranged sequentially to perform the positioning and/or ranging (e.g., TDoA and/or ToA). For example, slots 430 in rounds 420 may be scheduled into a ranging control phase (e.g., a signal slot) or an extended ranging control phrase, a ranging phase, and a measurement report phase, where the length/number of slots 430 in each phase is configurable. For example, the extended ranging control phase may include one or more slots 430 corresponding to the controllers of the cluster which round 420 is assigned to (e.g., M slots in the extended control phase may correspond to M controllers of the cluster). In some embodiments, in UWB ranging scenarios, the ranging control phase may only include a signal slot.

As noted above, when performing UWB sessions (e.g., performing UWB ranging sessions), potential RF interferences on the communicating channel (e.g., RF interferences caused by the other UBW devices in the vicinity (e.g., other UWB ranging/data transmission pare) and/or other Radio Access Technologies (RATs)) may cause information exchange inefficiency and/or inaccuracy of the measurements. Existing solutions such as applying slot-level CCA and fragmentation (e.g., fragmenting the preamble/synchronization packet and transmitting the fragments across several milliseconds) on the entire ranging block may lead to larger latency of the data transmission, and adding more logic and complexity to the MAC. The technical solutions described herein provides improved interference mitigation techniques for UWB sessions that could reduce/avoid the RF interference without introducing much complexity to the MAC nor increasing much ranging latency.

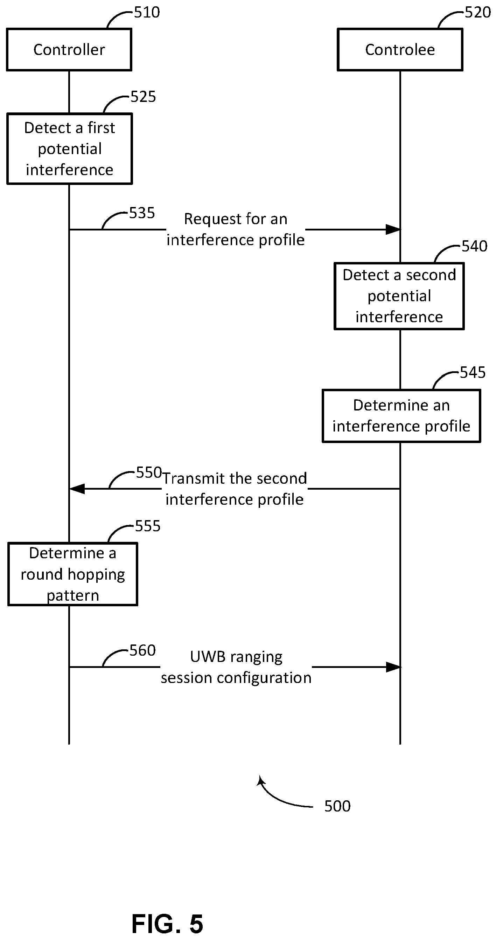

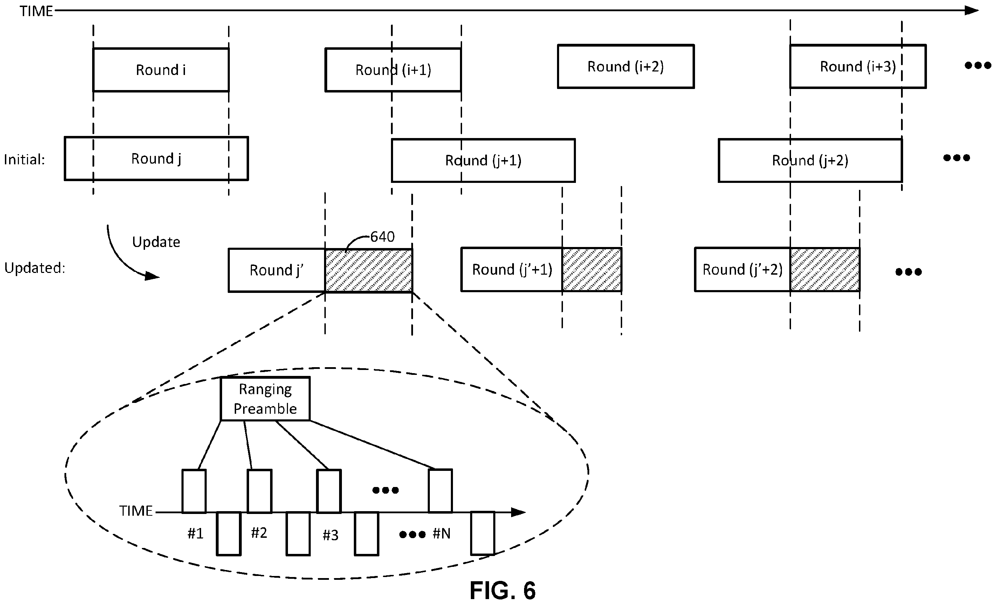

For example, **FIG. 5** is a flow diagram illustrating how a controller 510 and a controlee 520 may mitigate interferences in UWB ranging sessions, according to some embodiments. **FIG. 6** is a timing diagram showing an example of scheduling information exchange between the controller 510 and controlee 520 based on the interference mitigation process, according to some embodiments. For ease of illustration, FIGS. 5 and 6 will be described together. Here, the controller 510 and the controlee 520 may correspond with the controller 310 and the controlee 320 shown in FIGS. 3A and 3B.

As with the other figures provided herein, FIGS. 5 and 6 are provided as a nonlimiting example. As discussed in more detail below, alternative embodiments may perform certain functions in a different order, simultaneously, etc. It can be noted that arrows between the various components illustrated in FIG. 5 illustrate messages or information sent from one component to another.

As illustrated in FIG. 5, an interference mitigation process 500 starts at block 525 in which the controller 510 may determine a first potential interference (e.g.,

detecting a potential RF interference to the UWB ranging session). As used herein, the term "potential interference" may refer to an RF transmission (e.g., as a part of a series of transmissions) that could potentially interfere with a UWB ranging session (e.g., if a UWB ranging session is conducted without adapting to a pattern or sequence of RF transmissions shown by the potential interference). For example, the controller 510 may sense the RF channel(s) used/to be used by the controller 510 and may monitor the potential interference (e.g., RF signals) on those channel(s). In some embodiments, the first potential interference may include UWB transmission(s) on the RF channel(s) performed by, e.g., other UWB ranging pair(s) and/or other data transmission pair(s) (e.g., other RAT data transmissions) within the vicinity of the controller 510. In some embodiments, the first potential interference may include one or more RF transmissions having static round hopping pattern(s), pseudo-random round hopping pattern(s), any other suitable round hopping pattern(s), or any combination thereof. In some embodiments, a first interference pattern for the first potential interference may be determined.

At arrow 535, the controller 510 may transmit to the controlee 520 a request for an interference profile/report. In some embodiments, the request may include configurations of the scanning for the controlee 520 to determine the potential interference. For example, the request may indicate a time window to be scanned, a list of RF channels to be scanned, a sampling frequency for the scanning (e.g., the interval for scanning the RF channel), etc. In some embodiments, the interference profile/report may include signal strength values of the potential interference determined by the controlee 520, sampled at predetermined time intervals (e.g., a power delay profile), and/or the interference pattern of the potential interference.

At block 540, the controlee 520 may detect a second potential interference according to the request received from the controller 510. In some embodiments, as noted above, the second potential interference may be UWB transmission(s) on the RF channel(s) performed by, e.g., other UWB ranging pair(s) and/or other data transmission pair(s) (e.g., other RAT data transmissions) within the vicinity of the controlee 520. In some embodiments, the controller 510 and the controlee 520 may be apart by a distance, such that the first potential interference determined by the controller 510 may be different from the second potential interference determined by the controlee 520.

In some embodiments, when detecting for the second potential interference, the controlee 520 may scan a list of RF channel(s) (e.g., specified by the controller 510) and may determine the second potential interference on those RF channel(s). In some embodiments, the second potential interference may be determined based on a figure-of-merit (FoM) value of measurement(s) determined/estimated by the controlee 520 (e.g., a ToA FoM, an AoA FoM, etc., indicating the reliability or a confidence level of the estimated measurement). In some embodiments, one or more CCA may be performed for detecting the second potential interference. For example, CCA modes 5 and 6 may be performed for detecting UWB interferences. It is understood that other CCA mode(s) may also be performed for desired performance. In some embodiments, the type of the interference (e.g., the type of RAT) may also be determined accordingly.

At block 545, the controlee 520 may determine the interference profile/report indicating the second potential interference. As noted above, for a specific RF channel, the interference profile/report may include signal strength values of the interference determined by the controlee 520 on the RF channel, sampled at predetermined time intervals (e.g., a power delay profile). In some embodiments, the interference profile/report may also include the type of the potential interference (e.g., the type of RAT).

At arrow 550, the controlee 520 may transmit the interference profile/report to the controller 510. In some embodiments, the interference profile/report may be determined periodically at an interval specified by the controller 510 (e.g., specified in the request for the interference profile/report).

At block 555, the controller 510 may determine a round hopping pattern according to the first and the second potential interferences to mitigate the interferences (e.g., avoid the first and the second potential interferences by reduce the overlap between the round hopping pattern and the interference pattern). In some embodiments, the controller 510 may update the interference pattern (e.g., updating the first interference pattern) to include the second potential interference.

In some embodiments, the round hopping may include a static round hopping pattern. For example, as illustrated in FIG. 6, if a UWB ranging session is scheduled according to a round hopping pattern that fails to consider the second potential interference detected by the controlee 520 (e.g., in existing interference mitigation schemes), the UWB ranging session (e.g., including rounds j, j+1, j+2...) may overlap a large portion with the updated interference pattern (e.g., including rounds i, i+1, i+2,...). However, UWB ranging sessions scheduled according to the round hopping pattern determined based on considering both the first and the second potential interferences (e.g., including rounds j', j'+1, j'+2...) may capitalize the gap between the updated interference pattern (e.g., gaps between rounds i, i+1, i+2,...) such that the overlaps between ranging rounds of the UWB ranging session scheduled accordingly and the first or the second potential interference are reduced. For example, the determined round hopping pattern may maximize the use of the gap between rounds i, i+1, i+2, ... (e.g., align the start of round j'+n with the end of interference round i'+m, where n and m are any suitable integers). Accordingly, the potential interference determined at both the controller 510 and the controlee 520 may be mitigated.

In some embodiments, the controller 510 may inactive the slots of the ranging rounds (e.g., rounds j', j'+1, j'+2...) that still overlap with the potential interferences (e.g., rounds i, i+1, i+2,...) (e.g., overlapped slots 640). For example, the controller 510 may schedule no message transmission on overlapped slots 640.

Additionally or alternatively, in some other embodiments, the updated round hopping may also include a pseudo-random round hopping pattern. For example, to further increase the data transmission efficiency, the controller 510 may apply the CCA or time-hopping on overlapped slots 640, e.g., apply existing CCA and the fragmentation scheme as noted above on overlapped slots 640. Because the CCA or time-hopping scheme may only be applied on overlapped slots 640 instead of the entire rounds (e.g., rounds j', j'+1, j'+2...), the logic and complexity on the MAC and the latency may not be increase as much as existing schemes.

Referring back to FIG. 5, at block 560, a UWB ranging session configuration indicative of the round hopping pattern may be transmitted to the controlee 520 for scheduling the UWB ranging session (e.g., scheduling the transmission of one or more UWB ranging messages between the controller 510 and the controlee 520). For example, the data transmission for the UWB ranging session between the controller 510 and the controlee 520 may be scheduled according to the UWB ranging session configuration such that an overlap between the ranging rounds of the UWB ranging session and the first or the second potential interference is minimized.

In some embodiments, information relevant to the interference mitigation process 500 may be transmitted in-band or out-of-band of the UWB channel between the controller 510 and the controlee 520. For example, when transmitted in-band, the controller 510 may include the information (e.g., the request for the interference profile/report and/or the round hopping pattern) in the ranging control message (e.g., the ranging control phase of the ranging round as illustrated in FIG. 4). The controlee 520 may include the information (e.g., the interference profile/report) in the payload of the ranging response message (e.g., the ranging phase of the ranging round as illustrated in FIG. 4).

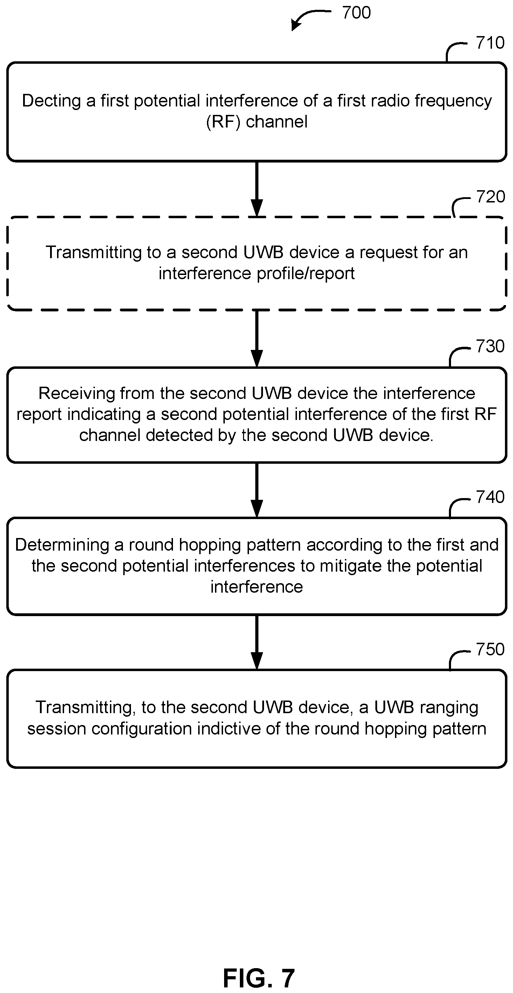

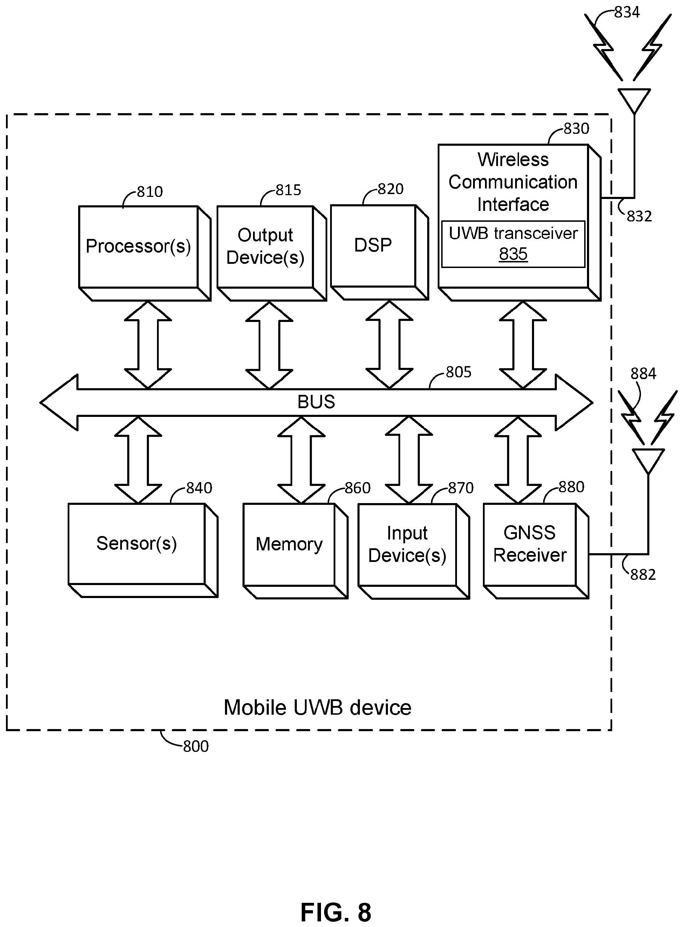

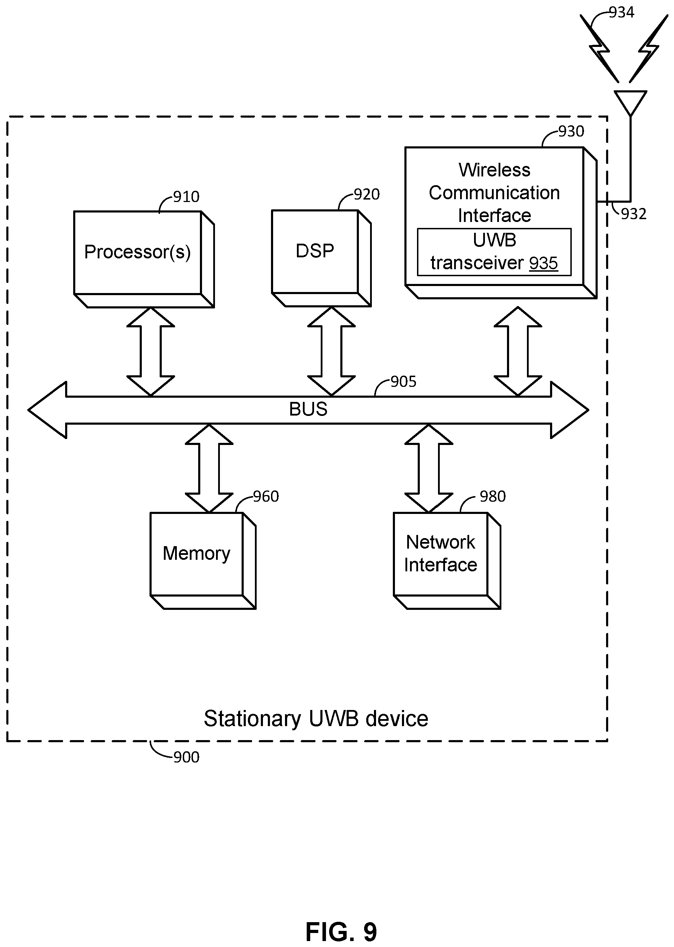

**FIG. 7** is a flow diagram of an interference mitigation method 700 of UWB wireless ranging performed by a first UWB device, according to an embodiment. Means for performing the functionality illustrated in one or more of the blocks shown in FIG. 7 may be performed by hardware and/or software components of a UWB device. Example components of UWB devices are illustrated in FIGS. 8 and 9 which are described in more detail below.

At block 710, the functionality comprises detecting a first potential interference (e.g., determining a potential RF interference to the UWB ranging session) of a first radio frequency (RF) channel. For example, the first UWB device (e.g., the controller 510 shown in FIG. 5) may sense the RF channel(s) used/to be used by the first UWB device and may monitor the potential interference on those RF channel(s). In some embodiments, the first potential interference may include UWB transmission(s) on the RF channel(s) performed by, e.g., other UWB ranging pair(s) and/or other data transmission pair(s) (e.g., other RAT data transmissions) within the vicinity of the first UWB device. In some embodiments, the first potential interference may include one or more RF transmissions having static round hopping pattern(s), pseudo-random round hopping pattern(s), any other suitable round hopping pattern(s), or any combination thereof. In some embodiments, a first interference pattern for the first potential interference may be determined.

Means for performing functionality at block 710 may comprise a bus 805, processor(s) 810, memory 860, wireless communication interface 830 (including optional UWB transceiver 835), and/or other components of a mobile UWB device 800 as illustrated in FIG. 8 and described hereafter. Means for performing functionality at block 710 may also comprise a bus 905, processor(s) 910, memory 960, wireless communication interface 930 (including optional UWB transceiver 935), and/or other components of a stationary UWB device 900 as illustrated in FIG. 9 and described hereafter.

In some embodiments, the interference mitigation method 700 include block 720, at which the functionality comprises transmitting to a second UWB device (e.g., the controlee 520 shown in FIG. 5) a request for an interference profile/report indicating the second potential interference. In some embodiments, the request may include configurations of the scanning for determining the interference performed by the second UWB device. For example, the request may indicate a time window to be scanned, a list of RF channels to be scanned, a sampling frequency for the scanning (e.g., the interval for scanning the RF channel), etc. In some embodiments, the interference profile/report may include signal strength values of the interference determined by the second UWB device, sampled at predetermined time intervals (e.g., a power delay profile). It is understood that alternatively or additionally, the second UWB device may perform the following steps (e.g., the steps described below) without receiving the above mentioned request from the first controller.

Means for performing functionality at block 720 may comprise a bus 805, processor(s) 810, memory 860, wireless communication interface 830 (including optional UWB transceiver 835), and/or other components of a mobile UWB device 800 as illustrated in FIG. 8 and described hereafter. Means for performing functionality at block 720 may also comprise a bus 905, processor(s) 910, memory 960, wireless communication interface 930 (including optional UWB transceiver 935), and/or other components of a stationary UWB device 900 as illustrated in FIG. 9 and described hereafter.

At block 730, the functionality comprises receiving from the second UWB device the interference report indicating a second potential interference of the first RF channel detected by the second UWB device. In some embodiments, the second UWB device may detect the second potential interference according to the request received from the first UWB device. In some embodiments, as noted above, the second potential interference may be UWB transmission(s) on the RF channel(s) performed by, e.g., other UWB ranging pair(s) and/or other data transmission pair(s) (e.g., other RAT data transmissions) within the vicinity of the second UWB device. For example, when determining the second potential interference, the second UWB device may scan a list of channel(s) (e.g., specified by the first UWB device) and may determine the second potential interference on those channel(s). In some embodiments, the second potential interference may be determined based on a figure-of-merit (FoM) value of measurement(s) determined/estimated by the second UWB device (e.g., a ToA FoM, an AoA FoM, etc., indicating the reliability or a confidence level of the estimated measurement). In some embodiments, one or more CCA may be performed for detecting the second potential interference. For example, CCA modes 5 and 6 may be performed for detecting UWB interferences. It is understood that other CCA mode(s) may also be performed for desired performance. In some embodiments, the type of the interference (e.g., the type of RAT) may also be determined accordingly.

As noted above, for a specific RF channel, the interference profile/report may include signal strength values of the interference determined by the second UWB device on that RF channel, sampled at predetermined time intervals (e.g., a power delay profile), and/or the interference pattern of the potential interference. In some embodiments, the interference profile/report may also include the type of the interference (e.g., the type of RAT).

Means for performing functionality at block 730 may comprise a bus 805, processor(s) 810, memory 860, wireless communication interface 830 (including optional UWB transceiver 835), and/or other components of a mobile UWB device 800 as illustrated in FIG. 8 and described hereafter. Means for performing functionality at block 730 may also comprise a bus 905, processor(s) 910, memory 960, wireless communication interface 930 (including optional UWB transceiver 935), and/or other components of a stationary UWB device 900 as illustrated in FIG. 9 and described hereafter.

At block 740, the functionality comprises determining a round hopping pattern according to the first and the second potential interferences to mitigate the potential interference (e.g., avoid the first and the second potential interferences by reducing the overlap between the updated round hopping and the first or the second potential interference). In some embodiments, the first UWB device may update the interference pattern (e.g., updating the first interference pattern) to include the second potential interference.

For example, as illustrated in FIG. 6, if a UWB ranging session is scheduled according to a round hopping pattern that fails to consider the second potential interference detected by the second UWB device (e.g., in existing interference mitigation schemes), the UWB ranging session (e.g., including rounds j, j+1, j+2...) may overlap a large portion with the updated interference pattern (e.g., including rounds i, i+1, i+2,...). However, UWB ranging sessions scheduled according to the round hopping pattern determined based on considering both the first and the second potential interferences (e.g., including rounds j', j'+1, j'+2...) may capitalize the gap between the updated interference pattern (e.g., gaps between rounds i, i+1, i+2,...) such that the overlaps between ranging rounds of the UWB ranging session scheduled accordingly and the first or the second potential interference are reduced. For example, the determined round hopping pattern may maximize the use of the gap between rounds i, i+1, i+2, ... (e.g., align the start of round j'+n with the end of interference round i'+m, where n and m are any suitable integers). Accordingly, the potential interference determined at both the first UWB device and the second UWB device may be mitigated.

In some embodiments, the first UWB device may inactive the slots of the ranging rounds (e.g., rounds j', j'+1, j'+2...) that still overlap with the interferences (e.g., rounds i, i+1, i+2,...) (e.g., overlapped slots 640). For example, the first UWB device may schedule no message transmission on overlapped slots 640.

In some other embodiments, to further increase the data transmission efficiency, the first UWB device may apply the CCA or time-hopping on overlapped slots 640, e.g., apply existing CCA and the fragmentation scheme as stated above on overlapped slots 640. Because the CCA or time-hopping scheme may only be applied on overlapped slots 640 instead of the entire rounds (e.g., rounds j', j'+1, j'+2...), the logic and complexity on the MAC and the latency may not be increase as much as existing schemes.

Means for performing functionality at block 740 may comprise a bus 805, processor(s) 810, memory 860, wireless communication interface 830 (including optional UWB transceiver 835), and/or other components of a mobile UWB device 800 as illustrated in FIG. 8 and described hereafter. Means for performing functionality at block 740 may also comprise a bus 905, processor(s) 910, memory 960, wireless communication interface 930 (including optional UWB transceiver 935), and/or other components of a stationary UWB device 900 as illustrated in FIG. 9 and described hereafter.

At block 750, the functionality comprises transmitting, to the second UWB device, a UWB ranging session configuration indicative of the round hopping pattern. For example, according to the UWB ranging session configuration, data transmission of the UWB ranging session between the first UWB device and the second UWB device may be scheduled such that an overlap between the ranging rounds of the UWB ranging session and the first or the second potential interference is reduced.

Means for performing functionality at block 750 may comprise a bus 805, processor(s) 810, memory 860, wireless communication interface 830 (including optional UWB transceiver 835), and/or other components of a mobile UWB device 800 as illustrated in FIG. 8 and described hereafter. Means for performing functionality at block 750 may also comprise a bus 905, processor(s) 910, memory 960, wireless communication interface 930 (including optional UWB transceiver 935), and/or other components of a stationary UWB device 900 as illustrated in FIG. 9 and described hereafter.

FIG. 8 is a block diagram of an embodiment of a mobile UWB device 800, which can be utilized as described herein. The mobile UWB device 800 may have cellular (e.g., 5G NR) capabilities and may therefore function as a UE in a cellular wireless network and/or perform cellular/UWB positioning as described herein. It should be noted that FIG. 8 is meant only to provide a generalized illustration of various components, any or all of which may be utilized as appropriate. For example, more basic/simple types of UWB devices may omit various components that may be included in more advanced/complex UWB devices. Furthermore, as previously noted, the functionality of the UE discussed in the previously described embodiments may be executed by one or more of the hardware and/or software components illustrated in FIG. 8.

The mobile UWB device 800 is shown comprising hardware elements that can be electrically coupled via a bus 805 (or may otherwise be in communication, as appropriate). The hardware elements may include processor(s) 810 which can include without limitation one or more general-purpose processors (e.g., an application processor), one or more special-purpose processors (such as digital signal processor (DSP) chips, graphics acceleration processors, application specific integrated circuits (ASICs), and/or the like), and/or other processing structures or means. Processor(s) 810 may comprise one or more processing units, which may be housed in a single integrated circuit (IC) or multiple ICs. As shown in FIG. 8, some embodiments may have a separate DSP 820, depending on desired functionality. Location determination and/or other determinations based on wireless communication may be provided in the processor(s) 810 and/or wireless communication interface 830 (discussed below). The mobile UWB device 800 also can include one or more input devices 870, which can include without limitation one or more keyboards, touch screens, touch pads, microphones, buttons, dials, switches, and/or the like; and one or more output devices 815, which can include without limitation one or more displays (e.g., touch screens), light emitting diodes (LEDs), speakers, and/or the like.

The mobile UWB device 800 may also include a wireless communication interface 830, which may comprise without limitation a modem, a network card, an infrared communication device, a wireless communication device, and/or a chipset (such as a Bluetooth® device, an IEEE 802.11 device, an IEEE 802.15.4 device, a Wi-Fi device, a WiMAX device, a WAN device, and/or various cellular devices, etc.), and/or the like, which may enable the mobile UWB device 800 to communicate with other devices as described herein. The wireless communication interface 830 may permit data and signaling to be communicated (e.g., transmitted and received) with access points, various base stations and/or other access node types, and/or other network components, computer systems, and/or any other electronic devices communicatively coupled therewith. The communication can be carried out via one or more wireless communication antenna(s) 832 that send and/or receive wireless signals 834. According to some embodiments, the wireless communication antenna(s) 832 may comprise a plurality of discrete antennas, antenna arrays, or any combination thereof. The antenna(s) 832 may be capable of transmitting and receiving wireless signals using beams (e.g., Tx beams and Rx beams). Beam formation may be performed using digital and/or analog beam formation techniques, with respective digital and/or analog circuitry. The wireless communication interface 830 may include such circuitry.

As illustrated, the wireless communication interface 830 may further comprise a UWB transceiver 835. The UWB transceiver 835 may be operated to perform the UWB operations described herein. Further, the wireless communications interface 830 may comprise one or more additional communication technologies with which any OOB functionalities described herein may be performed. According to some embodiments, the UWB transceiver 835 may be one of a plurality of UWB transceivers of the mobile UWB device 800. Further, the UWB transceiver may be used for functionality in addition to the UWB positioning functionality described herein. Although illustrated as part of the wireless communication interface 830, the UWB transceiver 835 may be separate from the wireless communication interface 830 in some embodiments.

Depending on desired functionality, the wireless communication interface 830 may comprise a separate receiver and transmitter, or any combination of transceivers, transmitters, and/or receivers to communicate with base stations (e.g., ng-eNBs and gNBs) and other terrestrial transceivers, such as wireless devices and access points. The mobile UWB device 800 may communicate with different data networks that may comprise various network types. For example, a WWAN may be a CDMA network, a TDMA network, a FDMA network, an Orthogonal Frequency Division Multiple Access (OFDMA) network, a Single-Carrier Frequency Division Multiple Access (SC-FDMA) network, a WiMAX (IEEE 802.16) network, and so on. A CDMA network may implement one or more RATs such as CDMA2000®, WCDMA, and so on. CDMA2000® includes IS-95, IS-2000 and/or IS-856 standards. A TDMA network may implement GSM, Digital Advanced Mobile Phone System (D-AMPS), or some other RAT. An OFDMA network may employ LTE, LTE Advanced, 5G NR, and so on. 5G NR, LTE, LTE Advanced, GSM, and WCDMA are described in documents from 3GPP. CDMA2000® is described in documents from a consortium named "3rd Generation Partnership Project 2" (3GPP2). 3GPP and 3GPP2 documents are publicly available. A WLAN may also be an IEEE 802.11x network, and a wireless personal area network (WPAN) may be a Bluetooth network, an IEEE 802.15x, or some other type of network. The techniques described herein may also be used for any combination of WWAN, WLAN and/or WPAN.

The mobile UWB device 800 can further include sensor(s) 840. Sensor(s) 840 may comprise, without limitation, one or more inertial sensors and/or other sensors (e.g., accelerometer(s), gyroscope(s), camera(s), magnetometer(s), altimeter(s), microphone(s), proximity sensor(s), light sensor(s), barometer(s), and the like), some of which may be used to obtain position-related measurements and/or other information.

Embodiments of the mobile UWB device 800 may also include a GNSS receiver 880 capable of receiving signals 884 from one or more GNSS satellites using an antenna 882 (which could be the same as antenna 832). Positioning based on GNSS signal measurement can be utilized to complement and/or incorporate the techniques described herein. The GNSS receiver 880 can extract a position of the mobile UWB device 800, using conventional techniques, from GNSS satellites of a GNSS system, such as GPS, Galileo, GLONASS, Quasi-Zenith Satellite System (QZSS) over Japan, IRNSS over India, BeiDou Navigation Satellite System (BDS) over China, and/or the like. Moreover, the GNSS receiver 880 can be used with various + storage device, a solid-state storage device, such as a random access memory (RAM), and/or a read-only memory (ROM), which can be programmable, flash-updateable, and/or the like. Such storage devices may be configured to implement any appropriate data stores, including without limitation, various file systems, database structures, and/or the like.

The memory 860 of the mobile UWB device 800 also can comprise software elements (not shown in FIG. 8), including an operating system, device drivers, executable libraries, and/or other code, such as one or more application programs, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions in memory 860 that are executable by the mobile UWB device 800 (and/or processor(s) 810 or DSP 820 within mobile UWB device 800). In some embodiments, then, such code and/or instructions can be used to configure and/or adapt a general-purpose computer (or other device) to perform one or more operations in accordance with the described methods.

**FIG. 9** is a block diagram of an embodiment of a stationary UWB device 900, which can be utilized as described herein. The stationary UWB device 900 may, for example, function as a UWB anchor for UWB and/or hybrid cellular/UWB positioning of a mobile UWB device (e.g., mobile UWB device 800). It should be noted that FIG. 9 is meant only to provide a generalized illustration of various components, any or all of which may be utilized as appropriate. In some embodiments, the stationary UWB device 900 may correspond to an anchor UWB having a known location, which may be used to determine the location of other UWB devices, including mobile UWB devices. According to some embodiments, the stationary UWB device 900 may be permanently stationary or temporarily stationary.

The stationary UWB device 900 is shown comprising hardware elements that can be electrically coupled via a bus 905 (or may otherwise be in communication, as appropriate). The hardware elements may include a processor(s) 910 which can include without limitation one or more general-purpose processors, one or more special-purpose processors (such as DSP chips, graphics acceleration processors, ASICs, and/or the like), and/or other processing structure or means. As shown in FIG. 9, some embodiments may have a separate DSP 920, depending on desired functionality. Location determination and/or other determinations based on wireless communication may be provided in the processor(s) 910 and/or wireless communication interface 930 (discussed below), according to some embodiments. The stationary UWB device 900 also can include one or more input devices, which can include without limitation a keyboard, display, mouse, microphone, button(s), dial(s), switch(es), and/or the like; and one or more output devices, which can include without limitation a display, light emitting diode (LED), speakers, and/or the like.

The stationary UWB device 900 might also include a wireless communication interface 930, which may comprise without limitation a modem, a network card, an infrared communication device, a wireless communication device, and/or a chipset (such as a Bluetooth® device, an IEEE 802.11 device, an IEEE 802.15.4 device, a Wi-Fi device, a WiMAX device, cellular communication facilities, etc.), and/or the like, which may enable the stationary UWB device 900 to communicate as described herein. The wireless communication interface 930 may permit data and signaling to be communicated (e.g., transmitted and received) to mobile devices, wireless network nodes (e.g., base stations, access points, etc.), and/or other network components, computer systems, and/or any other electronic devices described herein. The communication can be carried out via one or more wireless communication antenna(s) 932 that send and/or receive wireless signals 934.

As illustrated, the wireless communication interface 930 may further comprise a UWB transceiver 935. The UWB transceiver 935 may be operated to perform the UWB operations described herein. Further, the wireless communications interface 930 may comprise one or more additional communication technologies with which any OOB functionalities described herein may be performed. According to some embodiments, the UWB transceiver 935 may be one of a plurality of UWB transceivers of the stationary UWB device 900. Further, the UWB transceiver may be used for functionality in addition to the UWB positioning functionality described herein. Although illustrated as part of the wireless communication interface 930, the UWB transceiver 935 may be separate from the wireless communication interface 930 in some embodiments.

The stationary UWB device 900 may also include a network interface 980, which can include support of wireline communication technologies. The network interface 980 may include a modem, network card, chipset, and/or the like. The network interface 980 may include one or more input and/or output communication interfaces to permit data to be exchanged with a network, communication network servers, computer systems, and/or any other electronic devices described herein. In some embodiments, the stationary UWB device 900 may be communicatively coupled with one or more servers and/or other stationary UWB devices via the network interface 980.

In many embodiments, the stationary UWB device 900 may further comprise a memory 960. The memory 960 can include, without limitation, local and/or network accessible storage, a disk drive, a drive array, an optical storage device, a solid-state storage device, such as a RAM, and/or a ROM, which can be programmable, flash-updateable, and/or the like. Such storage devices may be configured to implement any appropriate data stores, including without limitation, various file systems, database structures, and/or the like.

The memory 960 of the stationary UWB device 900 also may comprise software elements (not shown in FIG. 9), including an operating system, device drivers, executable libraries, and/or other code, such as one or more application programs, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions in memory 960 that are executable by the stationary UWB device 900 (and/or processor(s) 910 or DSP 920 within stationary UWB device 900). In some embodiments, then, such code and/or instructions can be used to configure and/or adapt a general-purpose computer (or other device) to perform one or more operations in accordance with the described methods.

It will be apparent to those skilled in the art that substantial variations may be made in accordance with specific requirements. For example, customized hardware might also be used and/or particular elements might be implemented in hardware, software (including portable software, such as applets, etc.), or both. Further, connection to other computing devices such as network input/output devices may be employed.

With reference to the appended figures, components that can include memory can include non-transitory machine-readable media. The term "machine-readable medium" and "computer-readable medium" as used herein, refer to any storage medium that participates in providing data that causes a machine to operate in a specific fashion. In embodiments provided hereinabove, various machine-readable media might be involved in providing instructions/code to processors and/or other device(s) for execution. Additionally or alternatively, the machine-readable media might be used to store and/or carry such instructions/code. In many implementations, a computer-readable medium is a physical and/or tangible storage medium. Such a medium may take many forms, including but not limited to, non-volatile media and volatile media. Common forms of computer-readable media include, for example, magnetic and/or optical media, any other physical medium with patterns of holes, a RAM, a programmable ROM (PROM), erasable PROM (EPROM), a FLASH-EPROM, any other memory chip or cartridge, or any other medium from which a computer can read instructions and/or code.

The methods, systems, and devices discussed herein are examples. Various embodiments may omit, substitute, or add various procedures or components as appropriate. For instance, features described with respect to certain embodiments may be combined in various other embodiments. Different aspects and elements of the embodiments may be combined in a similar manner. The various components of the figures provided herein can be embodied in hardware and/or software. Also, technology evolves and, thus many of the elements are examples that do not limit the scope of the disclosure to those specific examples.

It has proven convenient at times, principally for reasons of common usage, to refer to such signals as bits, information, values, elements, symbols, characters, variables, terms, numbers, numerals, or the like. It should be understood, however, that all of these or similar terms are to be associated with appropriate physical quantities and are merely convenient labels. Unless specifically stated otherwise, as is apparent from the discussion above, it is appreciated that throughout this Specification discussion utilizing terms such as "processing," "computing," "calculating," "determining," "ascertaining," "identifying," "associating," "measuring," "performing," or the like refer to actions or processes of a specific apparatus, such as a special purpose computer or a similar special purpose electronic computing device. In the context of this Specification, therefore, a special purpose computer or a similar special purpose electronic computing device is capable of manipulating or transforming signals, typically represented as physical electronic, electrical, or magnetic quantities within memories, registers, or other information storage devices, transmission devices, or display devices of the special purpose computer or similar special purpose electronic computing device.

Terms, "and" and "or" as used herein, may include a variety of meanings that also is expected to depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean any combination of A, B, and/or C, such as A, AB, AA, AAB, AABBCCC, etc.

## Claims

1. A method (700) of ultra-wideband, UWB, wireless ranging performed by a first UWB device (800, 900), the method comprising:

   detecting (710) a first potential interference of a first radio frequency, RF, channel;
   receiving (730), from a second UWB device, an interference report indicating a second potential interference of the first RF channel detected by the second UWB device;
   determining (740) a round hopping pattern based on the first potential interference and the second potential interference for transmitting one or more UWB ranging messages between the first UWB device and the second UWB device; and
   transmitting (750), to the second UWB device, a UWB ranging session configuration indicative of the round hopping pattern.

2. The method of claim 1, wherein detecting the first potential interference comprises detecting an interference pattern of the first potential interference.

3. The method of claim 1, wherein the interference report comprises a list of signal strength values sampled at a predetermined time interval.

4. The method of claim 1, further comprising:
   inactivating slots of ranging rounds that overlap with the first potential interference or the second potential interference.

5. The method of claim 1, further comprising:

performing a clear channel assessment, CCA, or a time-hopping on slots of the ranging rounds that overlap with the first potential interference or the second potential interference.

6. The method of claim 1, wherein the round hopping pattern comprises a static round hopping pattern.

7. The method of claim 1, wherein the round hopping pattern comprises a pseudo-random round hopping pattern.

8. The method of claim 1 further comprising:
   transmitting (720) an interference report request to the second UWB device for the interference report, wherein the request indicates a time interval for determining the interference report.

9. The method of claim 8, wherein the interference report request includes a time window to be scanned, a list of RF channels to be scanned, a sampling frequency for the second UWB device to determine the second potential interference, or any combination thereof.

10. The method of claim 8, wherein the interference report request or the UWB ranging session configuration is transmitted using the first RF channel.

11. The method of claim 8, wherein the interference report request or the UWB ranging session configuration is transmitted using a second RF channel, different from the first RF channel.

12. The method of claim 1, wherein the interference report indicating the second potential interference of the RF channel is received using the first RF channel; and
    wherein the second potential interference is indicated in a ranging response message received from the second UWB device.

13. A first ultra-wideband, UWB, device (800, 900) for UWB wireless ranging, the first UWB device comprising:

    one or more transceivers (835, 935) capable of transmitting UWB wireless signals;
    a memory (860, 960); and
    one or more processors (810, 910) communicatively coupled with the one or more transceivers and the memory, wherein the one or more processors are configured to:

       detect (525) a first potential interference of a first radio frequency, RF, channel;
       receive (550), from a second UWB device, an interference report indicating a second potential interference of the first RF channel detected by the second UWB device;
determine (555) a round hopping pattern based on the first potential interference and the second potential interference for transmitting one or more UWB ranging messages between the first UWB device and the second UWB device; and
transmit (560), to the second UWB device, a UWB ranging session configuration indicative of the round hopping pattern.

14. The first UWB device of claim 13, wherein to detect the first potential interference, the one or more processors are further configured to:
detect an interference pattern of the first potential interference.

15. The first UWB device of claim 13, wherein the interference report comprises a list of signal strength values sampled at a predetermined time interval.

**Patentansprüche**

1. Ein Verfahren (700) zur Ultrabreitbanddrahtlosdistanzmessung bzw. für UWB-Drahtlosdistanzmessung (UWB = ultra-wideband), das durch eine erste UWB-Einrichtung (800, 900) durchgeführt wird, wobei das Verfahren Folgendes aufweist:

Detektieren (710) einer ersten potenziellen Interferenz eines ersten Funkfrequenz- bzw. RF-Kanals (RF = radio frequency);
Empfangen (730), von einer zweiten UWB-Einrichtung, eines Interferenzberichts, der eine zweite potenzielle Interferenz des ersten RF-Kanals anzeigt, die durch die zweite UWB-Einrichtung detektiert wird;
Bestimmen (740) eines Rundensprungmusters basierend auf der ersten potenziellen Interferenz und der zweiten potenziellen Interferenz zum Senden von einer oder mehreren UWB-Distanzmessungsnachrichten zwischen der ersten UWB-Einrichtung und der zweiten UWB-Einrichtung; und
Senden (750), an die zweite UWB-Einrichtung, einer UWB-Distanzmessungssitzungskonfiguration, die das Rundensprungmuster anzeigt.

2. Verfahren nach Anspruch 1, wobei Detektieren der ersten potenziellen Interferenz Detektieren eines Interferenzmusters der ersten potenziellen Interferenz aufweist.

3. Verfahren nach Anspruch 1, wobei der Interferenzbericht eine Liste von Signalstärkenwerten aufweist, die an einem vorbestimmten Zeitintervall abgetastet werden.

4. Verfahren nach Anspruch 1, das weiter Folgendes aufweist:
Deaktivieren von Schlitzen von Distanzmessungsrunden, die sich mit der ersten potenziellen Interferenz oder der zweiten potenziellen Interferenz überlappen.

5. Verfahren nach Anspruch 1, das weiter Folgendes aufweist:
Durchführen einer Überprüfung hinsichtlich eines freien Kanals bzw. CCA (CCA = clear channel assessment) oder von Zeitsprüngen bzw. eines Zeit-Hoppings auf Schlitzen der Distanzmessungsrunden, die sich mit der ersten potenziellen Interferenz oder der zweiten potenziellen Interferenz überlappen.

6. Verfahren nach Anspruch 1, wobei das Rundensprungmuster ein statisches Rundensprungmuster aufweist.

7. Verfahren nach Anspruch 1, wobei das Rundensprungmuster ein pseudozufälliges Rundensprungmuster aufweist.

8. Verfahren nach Anspruch 1, das weiter Folgendes aufweist:
Senden (720) einer Interferenzberichtsanfrage an die zweite UWB-Einrichtung für den Interferenzbericht, wobei die Anfrage ein Zeitintervall zum Bestimmen des Interferenzberichts anzeigt.

9. Verfahren nach Anspruch 8, wobei die Interferenzberichtsanfrage Folgendes aufweist: ein Zeitfenster, das gescannt werden soll, eine Liste von RF-Kanälen, die gescannt werden sollen, eine Sampling-bzw. Abtastfrequenz für die zweite UWB-Einrichtung zum Bestimmen der zweiten potenziellen Interferenz oder eine Kombination davon.

10. Verfahren nach Anspruch 8, wobei die Interferenzberichtsanfrage oder die UWB-Distanzmessungssitzungskonfiguration unter Nutzung des ersten RF-Kanals gesendet wird.

11. Verfahren nach Anspruch 8, wobei die Interferenzberichtsanfrage oder die UWB-Distanzmessungssitzungskonfiguration unter Nutzung eines zweiten RF-Kanals gesendet werden, der sich von dem ersten RF-Kanal unterscheidet.

12. Verfahren nach Anspruch 1, wobei der Interferenzbericht, der die zweite potenzielle Interferenz des RF-Kanals anzeigt, unter Nutzung des ersten RF-Kanals empfangen wird; und
wobei die zweite potenzielle Interferenz in einer Distanzmessungsantwortnachricht angezeigt wird, die von der zweiten UWB-Einrichtung empfangen wird.

13. Eine erste Ultrabreitband- bzw. UWB-Einrichtung (UWB = ultra-wideband) (800, 900) für UWB-Drahtlosdistanzmessung, wobei die erste UWB-Einrichtung Folgendes aufweist:

einen oder mehrere Transceiver (835, 935), die in der Lage sind UWB-Drahtlossignale zu senden;
einen Speicher (860, 960); und
einen oder mehrere Prozessoren (810, 910), die kommunikativ mit dem einen oder den mehreren Transceivern und dem Speicher gekoppelt sind, wobei der eine oder die mehreren Prozessoren konfiguriert sind zum:

Detektieren (525) eine ersten potenziellen Interferenz eines ersten Funkfrequenz- bzw. RF-Kanals (RF = radio frequency);
Empfangen (550), von einer zweiten UWB-Einrichtung, eines Interferenzberichts, der eine zweite potenzielle Interferenz des ersten RF-Kanals anzeigt, die durch die zweite UWB-Einrichtung detektiert wird;
Bestimmen (555) eines Rundensprungmusters basierend auf der ersten potenziellen Interferenz und der zweiten potenziellen Interferenz zum Senden von einer oder mehreren UWB-Distanzmessungsnachrichten zwischen der ersten UWB-Einrichtung und der zweiten UWB-Einrichtung; und
Senden (560), an die zweite UWB-Einrichtung, einer UWB-Distanzmessungssitzungskonfiguration, die das Rundensprungmuster anzeigt.

14. Erste UWB-Einrichtung nach Anspruch 13, wobei zum Detektieren der ersten potenziellen Interferenz, der eine oder die mehreren Prozessoren weiter konfiguriert sind zum:
Detektieren eines Interferenzmusters der ersten potenziellen Interferenz.

15. Erste UWB-Einrichtung nach Anspruch 13, wobei der Interferenzbericht eine Liste von Signalstärkenwerten aufweist, die in einem vorbestimmten Zeitintervall abgetastet werden.

**Revendications**

1. Procédé (700) de télémétrie sans fil à ultra-large bande, UWB, exécuté par un premier dispositif UWB (800, 900), le procédé comprenant :

la détection (710) d'une première interférence potentielle d'un premier canal de radiofréquence, RF ;
la réception (730), en provenance d'un deuxième dispositif UWB, d'un rapport d'interférence indiquant une deuxième interférence potentielle du premier canal RF détectée par le deuxième dispositif UWB ;
la détermination (740) d'un motif de saut circulaire basé sur la première interférence potentielle et la deuxième interférence potentielle pour la transmission d'un ou de plusieurs messages de télémétrie UWB entre le premier dispositif UWB et le deuxième dispositif UWB ; et
la transmission (750), au deuxième dispositif UWB, d'une configuration de session de télémétrie UWB indiquant le motif de saut circulaire.

2. Procédé selon la revendication 1, dans lequel la détection de la première interférence potentielle comprend la détection d'un motif d'interférence de la première interférence potentielle.

3. Procédé selon la revendication 1, dans lequel le rapport d'interférence comprend une liste de valeurs de force du signal échantillonnées à un intervalle de temps prédéterminé.

4. Procédé selon la revendication 1, comprenant en outre :
l'inactivation de créneaux des coups de télémétrie qui chevauchent la première interférence potentielle ou la deuxième interférence potentielle.

5. Procédé selon la revendication 1, comprenant en outre :
la réalisation d'une évaluation de canal clair, CCA, ou d'un saut temporel sur les créneaux des tours de télémétrie qui chevauchent la première interférence potentielle ou la deuxième interférence potentielle.

6. Procédé selon la revendication 1, dans lequel le motif de saut circulaire comprend un motif de saut circulaire statique.

7. Procédé selon la revendication 1, dans lequel le motif de saut circulaire comprend un motif de saut circulaire pseudo-aléatoire.

8. Procédé selon la revendication 1, comprenant en outre :
la transmission (720) d'une requête de rapport d'interférence au deuxième dispositif UWB pour le rapport d'interférence, dans lequel la requête indique un intervalle de temps pour déterminer le rapport d'interférence.

9. Procédé selon la revendication 8, dans lequel la requête de rapport d'interférence comporte une fenêtre temporelle à analyser, une liste de canaux RF à analyser, une fréquence d'échantillonnage pour le deuxième dispositif UWB pour déterminer la deuxième interférence potentielle, ou toute combinaison de celles-ci.

10. Procédé selon la revendication 8, dans lequel la requête de rapport d'interférence ou la configuration de session de télémétrie UWB est transmise en utilisant le premier canal RF.

11. Procédé selon la revendication 8, dans lequel la requête de rapport d'interférence ou la configuration de session de télémétrie UWB est transmise en utilisant le deuxième canal RF, différent du premier canal RF.

12. Procédé selon la revendication 1, dans lequel le rapport d'interférence indiquant la deuxième interférence potentielle du canal RF est reçu en utilisant le premier canal RF ; et
dans lequel la deuxième interférence potentielle est indiquée dans un message de réponse de télémétrie reçu en provenance du deuxième dispositif UWB.

13. Premier dispositif à ultra-large bande, UWB, (800, 900), pour la télémétrie sans fil UWB, le premier dispositif UWB comprenant :

    un ou plusieurs émetteurs-récepteurs (835, 935) capables de transmettre des signaux sans fil UWB ;
    une mémoire (860, 960) ; et
    un ou plusieurs processeurs (810, 910) reliés en communication avec les un ou plusieurs émetteurs-récepteurs et la mémoire, dans lequel les un ou plusieurs processeurs sont configurés pour :

        détecter (525) une première interférence potentielle d'un premier canal de radiofréquence, RF ;
        recevoir (550), en provenance d'un deuxième dispositif UWB, un rapport d'interférence indiquant une deuxième interférence potentielle du premier canal RF détectée par le deuxième dispositif UWB ;
        déterminer (555) un motif de saut de fréquence basé sur la première interférence potentielle et la deuxième interférence potentielle pour la transmission d'un ou de plusieurs messages de télémétrie UWB entre le premier dispositif UWB et le deuxième dispositif UWB ; et
        transmettre (560) au deuxième dispositif UWB une configuration de session de télémétrie UWB indiquant le motif de saut de fréquence.

14. Premier dispositif UWB selon la revendication 13, dans lequel, pour détecter la première interférence potentielle, les un ou plusieurs processeurs sont configurés en outre pour :
détecter un motif d'interférence de la première interférence potentiellle.

15. Premier dispositif UWB selon la revendication 13, dans lequel le rapport d'interférence comprend une liste de valeurs de force du signal échantillonnées à un intervalle de temps prédéterminé.

**FIG. 1**

**FIG. 2**

FIG. 3A

FIG. 3B

TIME ⟶

FIG. 4

**FIG. 5**

FIG. 6

— 700

— 710

Decting a first potential interference of a first radio frequency (RF) channel

— 720

Transmitting to a second UWB device a request for an interference profile/report

— 730

Receiving from the second UWB device the interference report indicating a second potential interference of the first RF channel detected by the second UWB device.

— 740

Determining a round hopping pattern according to the first and the second potential interferences to mitigate the potential interference

— 750

Transmitting, to the second UWB device, a UWB ranging session configuration indictive of the round hopping pattern

**FIG. 7**

**FIG. 8**

FIG. 9

**EP 4 609 220 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GR 20220100874
- EP 3629621 A1
- US 2021173066 A1